**Europäisches Patentamt**

**European Patent Office**

**Office européen des brevets**

(19)

(11) Numéro de publication: **0 210 096**
**B1**

(12) # FASCICULE DE BREVET EUROPEEN

(45) Date de publication du fascicule du brevet:
14.06.89

(51) Int. Cl.⁴: **B60T 13/14**

(21) Numéro de dépôt: **86401415.4**

(22) Date de dépôt: **26.06.86**

(54) Dispositif d'assistance hydraulique.

(30) Priorité: **03.07.85 FR 8510167**

(43) Date de publication de la demande:
**28.01.87 Bulletin 87/5**

(45) Mention de la délivrance du brevet:
**14.06.89 Bulletin 89/24**

(84) Etats contractants désignés:
**DE GB IT**

(56) Documents cités:
**DE-A- 2 360 140**
**DE-A- 2 942 979**
**FR-A- 1 479 746**
**FR-A- 2 554 875**
**GB-A- 2 078 325**

(73) Titulaire: **BENDIX France, 126, rue de Stalingrad,
F-93700 Drancy(FR)**

(72) Inventeur: **Kervagoret, Gilbert, 5 Impasse Nobleterre,
F-95100 Argenteuil(FR)**

(74) Mandataire: **Lejet, Christian et al, Division Technique
Service Brevets BENDIX Europe 126, rue de Stalingrad,
F-93700 Drancy(FR)**

## Description

La présente invention se rapporte aux dispositifs d'assistance hydraulique et plus particulièrement à un tel dispositif pour un circuit de freinage à fonctionnement mixte hydrodynamique (plus communément désigné sous l'appellation anglo-saxonne "full power") et hydrostatique.

On connaît du document FR-1-1479746 un dispositif d'assistance hydraulique du type "full power", prévu pour actionner la commande de l'embrayage d'un véhicule, qui comprend un moyen de piston comportant une valve de commande de fluide haute pression susceptible d'être actionnée par la pédale d'embrayage par l'intermédiaire d'un poussoir. Lors d'une défaillance du circuit haute pression, le moyen de piston devient libre de se déplacer permettant au poussoir de fonctionner comme piston de maître-cylindre conventionnel, et créer ainsi une pression hydrostatique de secours. Cependant, étant donné que le diamètre du poussoir est faible, le volume de fluide déplacé par le poussoir est limité et donc le dispositif ne peut pas convenir pour un système de freinage de véhicule.

L'invention a donc pour objet de proposer un dispositif d'assistance hydraulique du type dit "full power" susceptible de fonctionner comme un maître-cylindre conventionnel en cas de défaillance du circuit haute pression, et offrant un volume utile important de fluide convenant pour des actionnements successifs d'un système de freinage.

Le document DE-A 2 360 140 décrit un tel dispositif d'assistance hydraulique comprenant un corps pourvu d'un alésage dans lequel est monté coulissant un moyen de piston déplaçable sous l'effet de l'actionnement d'une pédale de freinage entre une première position faisant communiquer une première chambre, reliée à un circuit de freinage, à un réservoir basse pression et isolant cette chambre, d'une source de fluide haute pression, et une deuxième position isolant la chambre du réservoir basse pression et la faisant communiquer avec la source haute pression, le moyen de piston étant déplaçable sous l'effet de l'actionnement de la pédale de freinage lors d'une défaillance du circuit haute pression engendrant une pression dans une deuxième chambre reliée au circuit de freinage, la surface de travail du moyen de piston étant égale à la section dudit alésage, le moyen de piston comprenant une douille, dans laquelle est monté à coulissement un piston de commande, et un moyen de valve haute pression, le piston de commande étant déplaçable sous l'effet de l'actionnement de la pédale de freinage pour ouvrir le moyen de valve haute pression, le piston de commande étant déplaçable sous l'effet de l'actionnement de la pédale de freinage par l'intermédiaire d'un ressort, conformément au préambule de la première revendication.

Selon l'invention le piston de commande comprend, de plus, un joint d'étanchéité disposé radialement à l'intérieur d'un ressort de rappel monté entre le piston de commande et la douille.

De préférence, le dispositif selon l'invention comprend, de plus, un appui de ressort rotulé entre le ressort et le piston de commande.

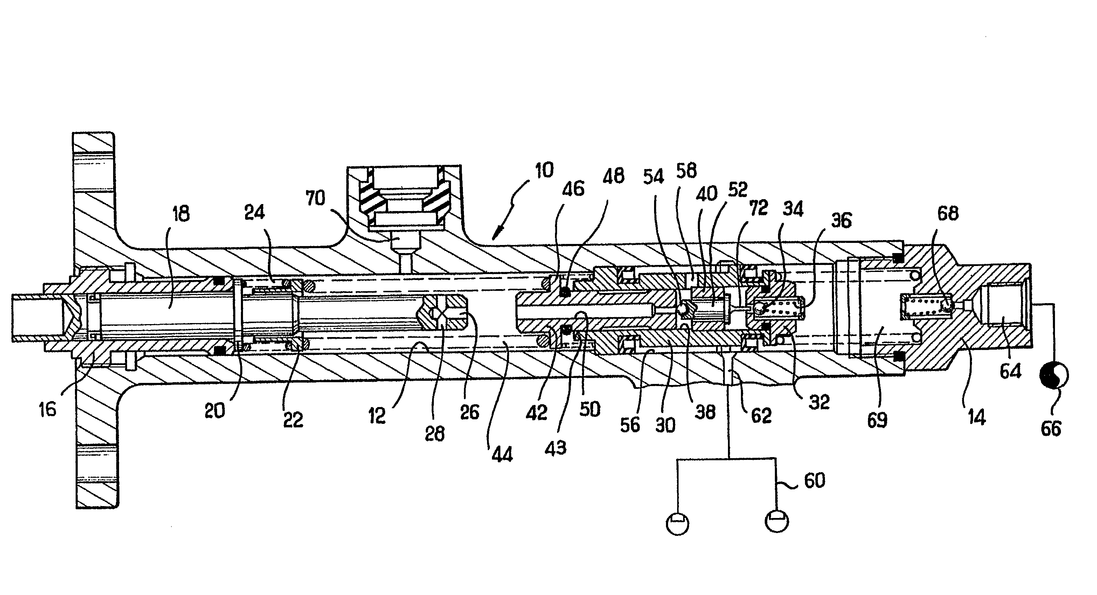

D'autres caractéristiques et avantages de la présente invention ressortiront de la description suivante d'un mode de réalisation donné à titre illustratif mais nullement limitatif, faite en relation avec le dessin annexé sur lequel :

La Figure unique est une vue en coupe longitudinale d'un dispositif d'assistance hydraulique selon l'invention.

Comme représenté sur la Figure, le dispositif d'assistance hydraulique pour système de freinage, comprend un corps 10 comportant un alésage principal étagé 12 obturé à une extrémité par un élément de fermeture 14. A l'autre extrémité du corps est montée fixe une fourrure 16 dans laquelle est monté, à coulissement étanche, un poussoir 18 destiné à être relié à une pédale de freinage (non représentée) et qui comporte une bride annulaire 20. Sur le poussoir 18 est montée coulissant une collerette 22 qui est reliée à la bride 20 par un ressort 24. A son extrémité opposée à la pédale de freinage le poussoir comporte un alésage 26 relié à une ouverture transversale 28.

Le dispositif comprend, de plus, une douille 30 montée à coulissement étanche dans l'alésage 12 et comportant un élément de fermeture 32 qui comprend un clapet à bille 34 sollicité vers sa position fermée par un ressort 36. La douille 30 comprend un alésage 38 dans lequel est monté fixe un manchon 40, et, à coulissement, un piston de commande 42. Le piston de commande 42 est relié à la collerette 22 par un ressort 44 qui prend appui sur une bride 46 du piston de commande 42. Le piston de commande 42 comporte un outre un joint annulaire 48 et comprend un alésage longitudinal étagé 50. Dans le manchon 40 est monté coulissant avec jeu un élément de commande 52 qui comporte une bille 54 susceptible de fermer l'alésage étagé 50. L'alésage 38 est relié à une chambre annulaire 56 entre la douille 30 et le corps 10 par une ouverture 58 et la chambre annulaire 56 est reliée à un circuit de freinage 60 par un passage 62.

L'élément de fermeture 14 comprend une entrée 64 destinée à être reliée à une source de fluide haute pression 66, et comporte un clapet à bille 68. Une chambre 69 est définie entre l'élément de fermeture 14 et la douille 30. L'alésage 12 est destiné à être relié à un réservoir basse pression (non représenté) par un passage 70.

Lors d'une mise en oeuvre du dispositif, le poussoir 18 se déplace vers la droite (en regardant le dessin) sous l'effet de la pédale de freinage, et, par l'intermédiaire des ressorts 26 et 44, provoque le déplacement vers la droite du piston de commande 42, ce qui provoque la fermeture de l'alésage étagé 50 par la bille 54. Si le déplacement du poussoir 18 continue, le piston de commande 42 et l'élément de commande 52 se déplacent ensemble vers la droite et une tige 72 sur l'élément de commande 52 ouvre le clapet à bille 34. L'ouverture du clapet à bille 34 permet au fluide sous pression de passer de la source 66 dans l'espace, entre l'élément de commande 52 et le manchon 40, puis vers les freins 60 du véhicule par l'ouverture 58 et le passage 62. La pression de fluide dans l'alésage 38 provoque une force de réaction sur le piston de commande 42, ce qui, par l'intermédiaire des ressorts 24 et 44 crée une force dite de sensation pédale. Le jeu entre l'élément de commande 52 et le manchon 40 sert à amortir la détente pour éviter les diverses vibrations hydrauliques.

Lors d'un défreinage, il y a relâchement de l'effort sur le poussoir 18 qui permet au piston de commande 42 de revenir vers la gauche, refermant le clapet à bille 34 et réouvrant l'alésage 50. Le fluide sous pression dans l'alésage 38 est ainsi libre de passer par l'alésage 50 et le passage 70 vers le réservoir basse pression. Si l'effort au relâchement se stabilise, la bille 54 referme l'alésage 50 sous l'action des divers ressorts et crée une pression correspondante dans les freins 60 du véhicule.

En cas de défaillance de la source haute pression 66, le clapet à bille 68 se referme, isolant la chambre 69 du circuit haute pression. Lors d'une mise en oeuvre du dispositif, le déplacement du poussoir 18 provoque la fermeture de l'alésage 50 par la bille 54, l'ouverture du clapet à bille 34 et la fermeture de l'alésage 38 par le joint annulaire 48. L'ensemble du piston de commande 42 et de la douille 30 se déplace vers la droite et comprime le fluide dans la chambre 69. Le fluide sous pression passe par le clapet à bille 34 qui est dans sa position ouverte, et, par l'ouverture 58 et le passage 62, vers les freins 60 du véhicule. L'étanchéité est assurée par le joint annulaire 48 qui vient en butée contre une surface cônique 43 sur le piston de commande 42.

Comme c'est l'ensemble du piston de commande 42 et de la douille 30 qui se déplace, la surface effective de travail est la section entière de l'alésage étagé 12 son point de diamètre effectif maximum. Le dispositif peut donc, en cas de défaillance du circuit haute pression, offrir un volume utile important de fluide convenant pour des actionnements successifs des freins du véhicule.

Il est envisagé qu'un appui de ressort rotulé soit prévu entre le ressort 44 et le piston de commande 42 pour éviter de brider le piston de commande 42 par l'action du ressort 44.

## Revendications

1. Dispositif d'assistance hydraulique comprenant un corps (10) pourvu d'un alésage (12) dans lequel est monté coulissant un moyen de piston (30, 42) déplaçable sous l'effet de l'actionnement d'une pédale de freinage entre une première position faisant communiquer une première chambre (38, 56), reliée à un circuit de freinage (60), à un réservoir basse pression et isolant cette chambre (38, 56) d'une source de fluide haute pression (66), et une deuxième position isolant la chambre (38, 56) du réservoir basse pression et la faisant communiquer avec la source haute pression (66), le moyen de piston (30, 42) étant déplaçable sous l'effet de l'actionnement de la pédale de freinage lors d'une défaillance du circuit haute pression (66) engendrant une pression dans une deuxième chambre (69) reliée au circuit de freinage (60), la surface de travail du moyen de piston (30, 42) étant égale à la section dudit alésage (12), le moyen de piston (30, 42) comprenant une douille (30), dans laquelle est monté à coulissement un piston de commande (42), et un moyen de valve haute pression (34), le piston de commande (42) étant déplaçable sous l'effet de l'actionnement de la pédale de freinage pour ouvrir le moyen de valve haute pression (34), le piston de commande (42) étant déplaçable sous l'effet de l'actionnement de la pédale de freinage par l'intermédiaire d'un ressort (44), caractérisé en ce que le piston de commande (42) comprend, de plus, un joint d'étanchéité (48) disposé radialement à l'intérieur d'un ressort de rappel monté entre le piston de commande (42) et la douille (30).

2. Dispositif selon la revendication 1, caractérisé en ce qu'il comprend, de plus, un appui de ressort rotulé entre le ressort (44) et le piston de commande (42).

## Claims

1. Hydraulic brake booster comprising a housing (10) provided with a bore (12) in which a piston means (30, 42) is slideably mounted, which means is displaceable under the effect of the actuation of a brake pedal between a first position linking a first chamber (38, 56), connected to a brake circuit (60), with a low-pressure reservoir and isolating this chamber (38, 56) from a high-pressure fluid source (66), and a second position isolating the chamber (38, 56) from the low-pressure reservoir and linking it with the high-pressure source (66), the piston means (30, 42) being displaceable under the effect of the actuation of the brake pedal in the event of a failure of the high-pressure circuit (66) thereby producing a pressure in a second chamber (69) connected to the brake circuit (60), the working area of the piston means (30, 42) being equal to the cross-section of the said bore (12), the piston means (30, 42) comprising a bush (30) in which there is slideably mounted an actuating piston (42), and a high-pressure valve means (34), the actuating piston (42) being displaceable under the effect of the actuation of the brake pedal so as to open the high-pressure valve means (34), the actuating piston (42) being displaceable under the effect of the actuation of the brake pedal by means of a spring (44), characterized in that the actuating piston (42) further comprises a sealing ring (48) arranged radially inside a return spring mounted between the actuating piston (42) and the bush (30).

2. Device according to Claim 1, characterized in that it further comprises a ball-joint spring support between the spring (44) and the actuating piston (42).

## Patentansprüche

1. Bremshilfevorrichtung mit einem mit einer Bohrung (12) versehenen Element (10), in welchem eine Kolbeneinrichtung (30, 42) gleitend gelagert ist, die unter der Betätigungswirkung eines Bremspedals verschiebbar ist zwischen einer ersten Stellung, in welcher eine erste, mit einem Bremskreis (60) verbundene Kammer (38, 56) mit einem Niederdruck-Behälter kommuniziert und diese Kammer (38, 56) von einer Hochdruck-Fluidquelle (66) trennt, und einer zweiten Stellung, in welcher die Kammer (38, 56) von dem Niederdruck-Behälter getrennt ist und sie mit der Hochdruck-Quelle (66) in Verbindung setzt, wobei die Kolbeneinrichtung (30, 42) unter der Betätigungswirkung des Bremspedals bei einer Störung des Hochdruckkreises (66) verschiebbar ist, welche in einer mit dem Bremskreis (60) verbundenen zweiten Kammer (69) einen Druck erzeugt, wobei die Arbeitsfläche der Kolbeneinrichtung (30, 42) dem Querschnitt der Bohrung (12) entspricht, die Kolbeneinrichtung (30, 42) eine Manschette (30), in welcher ein Steuerkolben (42) gleitend gelagert ist, sowie eine Hochdruck-Ventileinrichtung (34) umfaßt, wobei der Steuerkolben (42) unter der Betätigungswirkung des Bremspedals verschiebbar ist, um die Hochdruck-Ventileinrichtung (34) zu öffnen, wobei der Steuerkolben (42) unter der Betätigungswirkung des Bremspedals über eine Feder (44) verschiebbar ist, dadurch gekennzeichnet, daß der Steuerkolben (42) ferner eine Dichtung (48) umfaßt, welche innerhalb einer Rückholfeder radial angeordnet ist, die zwischen dem Steuerkolben (42) und der Manschette (30) angebracht ist.

2. Vorrichtung nach Anspruch 1, dadurch gekennzeichnet, daß sie zusätzlich eine Federabstützung umfaßt, die zwischen der Feder (44) und dem Steuerkolben (42) kugelabgestützt ist.